**Europäisches Patentamt**

**European Patent Office**

**Office européen des brevets**

(11) Numéro de publication : **0 436 438 B1**

(12) **FASCICULE DE BREVET EUROPEEN**

(45) Date de publication du fascicule du brevet :
**22.09.93 Bulletin 93/38**

(51) Int. Cl.⁵ : **B29C 67/18, B29C 45/14, B60J 10/02, // B29K27:06, B29K105:04**

(21) Numéro de dépôt : **90403771.0**

(22) Date de dépôt : **26.12.90**

(54) *Procédé et dispositif de réalisation d'un joint renfermant un insert, à la périphérie d'un vitrage et vitrage obtenu.*

(30) Priorité : **04.01.90 FR 9000055**

(43) Date de publication de la demande :
**10.07.91 Bulletin 91/28**

(45) Mention de la délivrance du brevet :
**22.09.93 Bulletin 93/38**

(84) Etats contractants désignés :
**DE ES GB IT**

(56) Documents cités :
**EP-A- 0 122 545
EP-A- 0 127 546
FR-A- 2 081 926
FR-A- 2 251 421
FR-A- 2 627 721
PATENT ABSTRACTS OF JAPAN, vol. 13, no. 122 (M-807)[3470], 27 mars 1989; & JP-A-63 297 009 (HASHIMOTO FORMING CO., LTD) 05-12-1988
IDEM
PATENT ABSTRACTS OF JAPAN, vol. 12, no. 274 (M-725)[3121], 29 juillet 1988; & JP-A-63 57 213 (NISSAN MOTOR CO., LTD) 11-03-1988
IDEM**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Jaffiol, Franck
30 rue Salvador Allende
F- 92000 Nanterre (FR)**
Inventeur : **Olivier, Jean Jacques
170 rue de Paris
F-92100 Boulogne (FR)**
Inventeur : **Thomas, Gérard
3 Résidence des Grilles, 16 rue des Grilles
F-93500 Pantin (FR)**

(74) Mandataire : **Bouget, Lucien et al
Cabinet Lavoix 2, Place d'Estienne d'Orves
F-75441 Paris Cédex 09 (FR)**

EP 0 436 438 B1

Jouve, 18, rue Saint-Denis, 75001 PARIS

## Description

L'invention concerne un procédé de réalisation d'un joint en une matière plastique durcissable renfermant un insert et solidaire d'une partie au moins de la périphérie d'un vitrage.

L'invention s'applique en particulier aux vitrages utilisés sur les véhicules automobiles, tels que les véhicules de tourisme, les tracteurs, les camions ou les autobus. Ces vitrages peuvent être constitués par toute pièce en verre minéral trempé ou feuilleté ou en une matière organique telle que le polyméthacrylate de méthyle ou le polycarbonate.

Ces vitrages peuvent être fixes et constituer par exemple des pare-brises, des lunettes arrière ou des custodes de véhicules ou encore mobiles et constituer des glaces latérales ou des toits ouvrants ; dans le cas des toits ouvrants, le vitrage est solidaire à sa périphérie d'un cadre rigide.

Dans la plupart des cas, ces vitrages ne sont pas de forme plate et présentent au contraire un galbe dans une ou deux directions.

Dans le cas où le vitrage est galbé dans une seule direction, le galbe est défini de manière quantitative par la valeur du rayon d'un cylindre enveloppant le vitrage galbé. Ce rayon est déterminé par mesure de la flèche par rapport à un plan de référence prise par le vitrage, lorsque celui-ci repose sans contrainte sur le plan de référence. La valeur de ce rayon est généralement comprise entre 900 et 1200 mm.

Certains vitrages présentent un double galbe ou double bombage dont l'amplitude peut être définie de manière quantitative comme la valeur maximale $h$ que prend la flèche du vitrage par rapport à un plan de référence, lorsque la périphérie du vitrage repose sans contraintes sur ce plan. La longueur de la flèche est généralement comprise entre 80 et 150 mm dans le cas des vitrages pour véhicules automobiles.

En fait, de manière plus générale, les vitrages mis en oeuvre dans le cadre de la présente invention pourront présenter un simple ou un double galbe se traduisant par une flèche comprise entre 3 et 300 mm.

Les vitrages pour véhicules automobiles comportent très souvent un joint en caoutchouc ou en matière plastique disposé sur tout ou partie de la périphérie du vitrage. Un tel joint peut assurer une fonction d'étanchéité ou constituer un cache dissimulant le bord du vitrage. Dans ce dernier cas, l'étanchéité peut être assurée par un cordon de colle intercalé entre le vitrage et la paroi extérieure de la carrosserie.

On a proposé divers procédés de surmoulage d'un joint de caoutchouc ou de matière plastique sur la partie périphérique d'un vitrage, ces procédés permettant d'obtenir un joint parfaitement adapté à la dimension du vitrage et parfaitement étanche.

On connaît par exemple des procédés de moulage de joint par injection sous haute pression de matières telles que le caoutchouc EPDM constitué par un mélange à base d'éthylène, propylène, diène monomère, d'autres matières du type caoutchouc ou encore des matières thermoplastiques.

On connaît également des procédés de moulage sous basse pression de matières telles que le polyuréthanne ou d'autres matériaux réactifs. Ces matériaux peuvent être mis en oeuvre pour la réalisation de joints par injection à basse pression, en particulier par le procédé connu sous le nom de RIM (Reaction Injection Molding).

Ces procédés, qu'ils soient réalisés à haute ou à basse pression, nécessitent d'injecter la matière plastique dans l'empreinte d'un moule réalisé en une matière métallique telle que l'aluminium ou l'acier.

Ces procédés présentent donc des difficultés de mise en oeuvre dans le cas de vitrages galbés sur le bord desquels on réalise le surmoulage du joint par injection. Ces difficultés sont d'autant plus grandes que le galbe des vitrages est plus important.

Dans le cas d'un vitrage en verre minéral à double galbe désigné communément comme vitrage sphérique ou en forme de bulle, on ne peut admettre pratiquement aucune déformation du vitrage pendant le moulage du joint. Un écart, même de très faible amplitude par rapport à la cote nominale du moule peut se traduire dans ce cas par le bris du vitrage, lors de la fermeture du moule ou lors de l'injection de la matière plastique. Il est alors nécessaire de nettoyer soigneusement le moule pour éliminer tout débris de verre, avant d'effectuer une nouvelle opération d'injection. Une telle opération de nettoyage est coûteuse car elle immobilise l'outillage de production pendant un temps relativement long. En outre, la surface métallique des empreintes du moule peut être détériorée par les éclats de verre ou même par le frottement du bord périphérique du vitrage si les cotes de ce vitrage se trouvent en dehors des tolérances dimensionnelles du moule.

On a proposé, dans une demande de brevet FR-A-2 627 721 déposée le 29 février 1988 par les Sociétés AUTOMOBILES PEUGEOT et AUTOMOBILES CITROEN, un procédé de réalisation d'un joint sur la périphérie d'un vitrage, par moulage d'une matière plastique à l'état fluide autour du vitrage, le durcissement ultérieur du joint étant réalisé par activation de la matière plastique par un rayonnement électromagnétique, à l'intérieur du moule.

Le mécanisme du durcissement de la matière plastique peut faire appel à la gélification, à la vulcanisation ou à la réticulation de la matière plastique liquide qui est activée par un rayonnement à haute ou à très haute fréquence ou par un rayonnement du type micro-ondes.

On utilise un moule transparent aux rayonnements à haute fréquence et aux micro-ondes et de préférence un moule en un matériau souple tel qu'un élastomère de silicone.

Un tel procédé est donc parfaitement adapté au cas des vitrages présentant un galbe, dans la mesure où le vitrage est placé entre deux parties d'un moule en matière souple sur lesquelles on exerce une pression modérée, pendant le moulage.

Dans le cas des vitrages utilisés dans la construction automobile, la nécessité d'inclure des inserts dans les joints disposés à la périphérie des vitrages se présente de plus en plus fréquemment.

Ces inserts peuvent avoir un rôle purement décoratif ou au contraire remplir certaines fonctions utilitaires, par exemple dans le cas de véhicules nécessitant le passage de câbles électriques ou de canalisations de formes diverses le long du joint de certains vitrages.

Dans le cas de la réalisation d'un joint de vitrage surmoulé par le procédé RIM, on a déjà proposé de disposer des joncs à but décoratif sur la face externe visible du joint, ces joncs étant au moins partiellement enrobés de matière plastique pendant le moulage du joint.

Dans le cas de pièces réalisées sur des unités à grande cadence de production, le moule est réalisé en aluminium ou en acier et la qualité de l'opération de surmoulage du jonc décoratif dépend de la précision des cotes de ce jonc et du contrôle de la pression du mélange réactif à base de polyuréthanne lors de la phase d'injection et de cuisson du joint.

Un positionnement parfait et un blocage efficace du jonc dans une gorge disposée dans l'empreinte du moule en matériau métallique rigide nécessite en effet une grande précision dimensionnelle lors de la fabrication du jonc.

En outre, si la pression d'injection n'est pas parfaitement contrôlée, le jonc est susceptible de se déplacer à l'intérieur du moule et des bavures de matière plastique peuvent passer par dessus la surface du jonc et être ainsi visibles de l'extérieur sur la pièce à l'état fini.

Le but de l'invention est donc de proposer un procédé de réalisation d'un joint en une matière plastique durcissable solidaire d'une partie au moins de la périphérie d'un vitrage minéral ou organique, par injection de la matière plastique à l'état fluide dans l'empreinte d'un moule fermé en matière souple dans laquelle est placé le bord du vitrage, la matière plastique étant injectée dans le moule à l'état inerte puis activée par un rayonnement électromagnétique à haute, à très haute ou à ultra haute fréquence, ce joint comportant en outre un insert et ce procédé étant d'une mise en oeuvre simple et très sûre, quel que soit le type d'insert à placer dans le joint et quel que soit le galbe présenté par le vitrage.

Dans ce but, l'insert est mis en place dans le moule avant l'injection de la matière plastique, cette injection et le durcissement ultérieur de la matière plastique étant effectués à l'intérieur du moule dans lequel sont disposés, pendant ces opérations, le bord du vitrage et l'insert, dans leur position relative définitive sur le vitrage à l'état élaboré.

L'invention est également relative à un dispositif pour la mise en oeuvre du procédé de réalisation du joint renfermant un insert et au vitrage surmoulé obtenu.

Afin de bien faire comprendre l'invention, on va maintenant décrire, à titre d'exemple non limitatif, en se reportant aux figures jointes en annexe, deux modes de réalisation du procédé suivant l'invention, dans le cas d'inserts ayant des formes et des fonctions différentes.

La figure 1 est une vue en coupe et en élévation d'un dispositif de moulage et de durcissement permettant de mettre en oeuvre le procédé suivant l'invention pour la fabrication d'un vitrage galbé pour véhicule automobile ayant un joint renfermant un insert.

La figure 2 est une vue à grande échelle de la section de l'empreinte d'un moule pour la réalisation d'un joint renfermant un insert suivant un premier mode de réalisation.

La figure 3 est une vue à grande échelle de la section de l'empreinte d'un moule pour la réalisation d'un joint selon un second mode de réalisation renfermant plusieurs inserts.

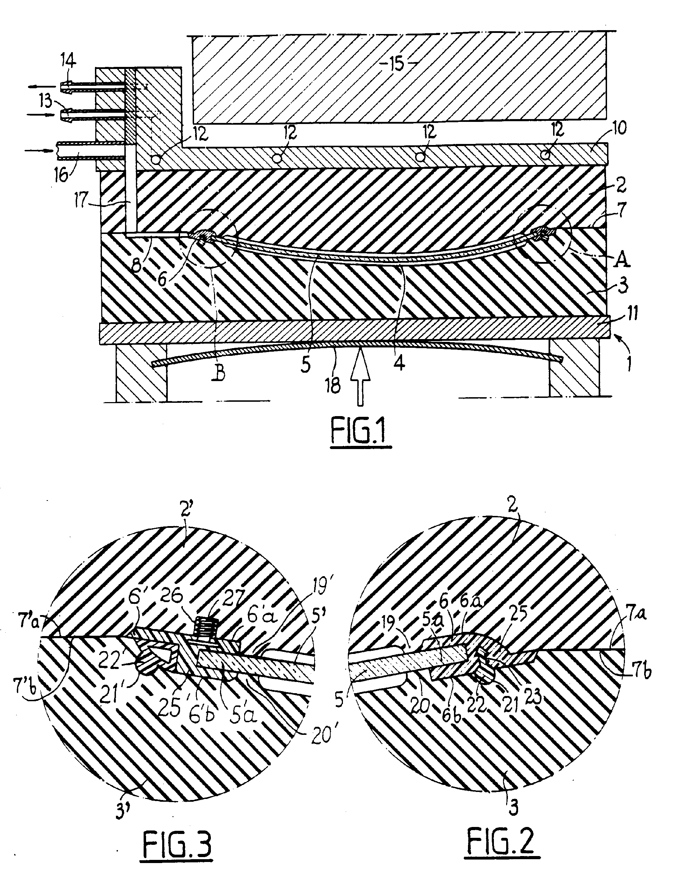

Sur la figure 1, on voit un moule désigné de manière générale par le repère 1 comportant une partie supérieure ou poinçon 2 et une partie inférieure ou matrice 3 présentant deux faces destinées à venir en vis-à-vis dans la position de fermeture du moule comme représenté sur la figure 1, ces faces étant usinées de manière à délimiter entre elles un espace courbe 4 destiné à recevoir le vitrage galbé 5 et une empreinte de moulage périphérique 6 pour la réalisation d'un joint en matière plastique par surmoulage sur le bord périphérique du vitrage 5.

Le poinçon 2 et la matrice 3 comportent à leur périphérie des surfaces planes de fermeture qui sont appliquées l'une sur l'autre avec une certaine pression de manière à réaliser la fermeture étanche du moule suivant le plan de joint 7.

Le poinçon et la matrice sont d'autre part usinés de manière à constituer un canal 8 d'alimentation en matière plastique à l'état fluide de l'empreinte de moulage du joint 6.

Les faces extérieures du poinçon 2 et de la matrice 3 sont en contact avec des plaques en aluminium 10 et 11 respectivement. Ces plaques permettent de transmettre aux deux parties du moule et à une masse de matière plastique injectée dans l'empreinte 6 un rayonnement à haute fréquence engendré par un générateur 15.

De plus, les plaques en aluminium 10 et 11 sont percées de canaux tels que 12 dans lesquels un liquide de refroidissement tel que de l'eau est mis en circulation, lorsque les plaques en aluminium sont soumises au rayonnement à haute fréquence produit par le générateur 15.

L'ensemble des canaux 12 est relié à deux ajutages 13 et 14 assurant respectivement l'alimentation des canaux et la récupération de l'eau de refroidissement.

De plus, la plaque supérieure 10 en contact avec le poinçon 2 porte un ajutage 16 communiquant avec le canal d'injection 8 du moule par un canal de jonction 17 traversant une partie de la plaque 10 et le poinçon 2.

La partie supérieure du moule constituée par le poinçon 2 et la plaque 10 est reliée au bâti fixe de l'installation et la partie inférieure du moule constituée par la matrice 3 et la plaque 11 est reliée, par l'intermédiaire de cette plaque 11, à un élément de presse 18 susceptible d'exercer une force verticale dirigée vers le haut sur la plaque 11 et la matrice 3, de manière à assurer une pression de contact suffisante entre les deux parties du moule, suivant le plan de joint 7, pendant l'opération de surmoulage.

Sur la figure 2, on a représenté à grande échelle, la section d'un moule tel que représenté sur la figure 1, au niveau de l'empreinte de moulage périphérique 6 d'un joint en matière plastique.

La zone du moule représentée sur la figure 2 correspond à la zone A représentée sur la figure 1.

Le poinçon 2 et la matrice 3 sont usinés de manière à présenter successivement de la périphérie vers l'intérieur deux surfaces d'appui planes 7a et 7b destinées à constituer le plan de joint 7 et deux surfaces en creux 6a et 6b destinées à constituer la cavité ou empreinte de moulage 6 dans la position de fermeture du moule.

L'empreinte de moulage 6 du joint est délimitée vers l'intérieur par deux parties annulaires en saillie 19 et 20 du poinçon 2 et de la matrice 3 respectivement venant en appui sur les faces opposées du vitrage 5, au voisinage de sa périphérie, dans la position de fermeture du moule.

Le vitrage 5 présente une partie périphérique 5a venant en saillie dans l'empreinte de moulage autour de laquelle est réalisé le moulage de la matière plastique.

La surface supérieure de la matrice 3 est en outre usinée au niveau de sa partie en creux délimitant l'empreinte de moulage 6, pour constituer une gorge annulaire 21 dont la section a la forme d'une portion de cercle.

Avant d'effectuer le moulage, le poinçon 2 et la matrice 3 étant en position écartée l'un de l'autre, on introduit un jonc 22 dans la gorge 21.

Le poinçon 2 et la matrice 3 sont réalisés en une matière souple telle qu'un élastomère de silicone.

Le jonc 22 peut être réalisé en PVC plastifié et teinté dans la masse. La section du jonc 22 de forme circulaire présente un rayon sensiblement égal ou légèrement supérieur au rayon de la gorge 21 de la matrice 3. De cette manière, le jonc 22 engagé dans la gorge 21 est parfaitement maintenu dans une position fixe sur la matrice 3, grâce à l'élasticité de la matière du moule.

Le jonc 22 comporte une partie saillante à l'intérieur de la cavité de moulage 6 comportant des éléments d'accrochage 23, par exemple en forme d'ancre de marine ou toute autre forme permettant une fixation définitive du jonc 22 dans la matière plastique constituant le joint du vitrage 5, après solidification de cette matière plastique. Le jonc 22 peut comporter toutes aspérités ou parties en contre-dépouilles permettant de réaliser un ancrage efficace du jonc dans la matière du joint.

Pour la mise en oeuvre du procédé suivant l'invention, le moule étant ouvert, un vitrage galbé 5 est placé sur la surface supérieure de la matrice 3, au niveau de l'ouverture 4. Le bord de vitrage galbé 5 vient reposer sur le rebord annulaire 20 de la matrice, de manière qu'une partie 5a constituant le rebord de vitrage se trouve saillante à l'extérieur du rebord annulaire 20.

Le jonc 22 est mis en place comme décrit précédemment et le moule est refermé de manière que le poinçon et la matrice viennent occuper les positions représentées sur les figures 1 et 2. Le rebord annulaire 19 du poinçon 2 vient en appui sur la périphérie du vitrage 5, en vis-à-vis du rebord 20. Les surfaces planes 7a et 7b viennent elles-mêmes en contact et, lors du serrage du moule grâce à l'élément de presse 18 agissant sur la matrice par l'intermédiaire de la plaque 11, l'empreinte de moulage 6 se trouve fermée de manière étanche sur toute sa périphérie, à l'exception de l'ouverture du canal 8 débouchant dans cette empreinte de moulage 6 et d'un évent non représenté, destiné de façon classique à éliminer les bulles d'air.

Le rebord extérieur 5a du vitrage 5 et la partie saillante à l'intérieur de l'empreinte 6 du jonc 22 sont dans une disposition relative parfaitement déterminée pendant le serrage du moule.

On injecte par l'intermédiaire de l'ajutage 16 et des canaux 17 et 8, dans l'empreinte de moulage 6, un plastisol PVC d'une viscosité de 5000 mPa.s à 22°C. Les principaux constituants de ce plastisol PVC sont les suivants :

| | |
|---|---|
| PVS LUCOVYL PB 1302 (ATOCHEM) | 100 parties |
| Plastifiant Phtalate linéaire C9 - C11 | 50 parties |
| Stabilisant (sel organique de baryum et de zinc) | 2 parties |
| Epoxy stéarate d'octyle | 5 parties. |

D'autres constituants tels que des pigments et des substances permettant de régler la viscosité de la matière plastique sont introduits dans le mélange en quantité adéquate pour obtenir la teinte voulue du joint et une viscosité satisfaisante de la matière plastique au moment de son injection.

Le plastisol est injecté pendant une durée de 20 secondes environ à l'intérieur de l'empreinte 6 du moule, une force de fermeture d'environ 1 tonne étant exercée par l'élément de presse 18 sur la plaque 11 et la matrice 3.

Un rayonnement électromagnétique à haute fréquence est appliqué au moule pendant une durée d'une minute grâce au générateur 15 et par l'intermédiaire des plaques en aluminium 10 et 11.

Dans un mode de réalisation préférentiel de l'invention, on applique un rayonnement électromagnétique d'une fréquence de 27,12 MHz.

Le moule restant en position fermée est refroidi pendant une durée sensiblement égale à 2 minutes. Le moule est ensuite ouvert et la pièce est démoulée. Cette pièce est constituée du vitrage galbé 5 comportant à sa périphérie un joint 25 surmoulé constitué par le plastisol PVC plastifié et présentant une dureté de 80 Shore A.

Le jonc 22 est légèrement saillant et apparent sur le côté visible du joint 25, de manière que ce jonc coloré dans la masse constitue un élément décoratif du joint 25. La parfaite étanchéité de la cavité 6 du moule en position de fermeture permet d'éviter toute fuite et toute bavure de matière plastique autour du jonc 22, sur la périphérie du vitrage 5 au niveau des rebords 19 et 20 et dans le plan de joint 7.

En effet, une très bonne étanchéité est obtenue par le fait que les deux parties du moule sont réalisées en un élastomère dont les surfaces d'appui viennent en contact étanche avec des surfaces d'appui correspondantes, en élastomère, en verre ou en PVC et par le fait que la matière plastique constituant le joint 25 est injectée dans l'empreinte 6 du moule à une faible pression (quelques bars).

En outre, le vitrage galbé 5 ne subit pas de contraintes importantes pendant le moulage et ne subit pas de détérioration sur sa partie périphérique à l'intérieur de l'empreinte de moulage 6.

La position relative du jonc 22 et de la partie périphérique 5a du vitrage est parfaitement déterminée et maintenue pendant le moulage et le durcissement du joint.

Le jonc 22 pourrait également avoir une fonction différente d'une fonction décorative. Il pourrait constituer, par exemple, un rembourrage local permettant d'améliorer l'étanchéité du joint 25, lorsque le vitrage est mis en place sur un véhicule automobile. Le matériau constituant le jonc 22 est alors, de préférence, un matériau à structure cellulaire. Un tel matériau présentera avantageusement une tangente de l'angle de perte diélectrique inférieure ou égale à $10^{-3}$, à la fréquence des micro-ondes ou des ondes haute fréquence.

On évite ainsi un échauffement du matériau de l'insert pendant le durcissement du joint.

Le matériau de l'insert peut être constitué par du caoutchouc EPDM ou silicone.

Sur la figure 3, on voit une partie de la section du moule représentée sur la figure 1 pouvant correspondre au détail B de cette figure, dans le cas d'un second mode de réalisation de l'invention.

La figure 3 montre une variante de réalisation de la cavité de moulage 6' d'un joint à la périphérie d'un vitrage 5' de forme galbée qui peut être analogue au vitrage 5 représenté sur la figure 1.

La partie supérieure 2' du moule constitue un poinçon et la partie inférieure 3' une matrice. Ces éléments sont sensiblement identiques dans leur forme générale et dans leur structure aux éléments 2 et 3 représentés sur la figure 1.

La surface inférieure du poinçon 2' est usinée pour constituer successivement de l'extérieur vers l'intérieur du moule, une portée de joint plane 7'a, une partie en creux 6'a et un rebord annulaire 19'.

La matrice 3' comporte une surface supérieure usinée pour constituer successivement une portée de joint plane 7'b destinée à s'appliquer contre la portée 7'a lors de la fermeture du moule, une partie en creux 6'b et un rebord annulaire 20'.

La matrice 3' comporte de plus, dans sa partie en creux 6'b, une cavité 21' annulaire ayant une section en forme de portion de cercle.

Avant la fermeture du moule, le poinçon et la matrice étant séparés, un insert 22' est mis en place dans la partie en creux 6'b de la surface de la matrice 3'. Cet insert est constitué sous la forme d'un tube creux ou tubing ayant une section transversale en forme de triangle curviligne ou de portion de cercle. Cet insert 22' comporte un élément de fixation annulaire en saillie destiné à venir s'engager dans l'ouverture annulaire 21' pour assurer le maintien de l'insert 22' dans l'empreinte de moulage 6' avant la fermeture du moule et pendant le surmoulage d'un joint en matière plastique dans l'empreinte 6' du moule.

Le vitrage galbé 5' est placé de manière qu'il présente une partie périphérique 5'a saillante à l'intérieur de l'empreinte de moulage 6' du joint.

De plus, le poinçon 2' du moule est percé de trous borgnes tels que le trou 26 dans lesquels on peut venir engager des inserts constitués par des pions tels que le pion 27 comportant une tête à diamètre élargi engagée dans l'empreinte 6' du moule et une partie filetée extérieure à l'empreinte du moule engagée dans un trou borgne 26.

La réalisation du joint 25' en matière plastique est effectuée comme précédemment, par injection d'un plastisol dont la composition peut être identique à la composition donnée ci-dessus, à l'intérieur de l'empreinte de moulage 6'. Le plastisol à l'état liquide est ensuite gélifié par un traitement sous haute fréquence, pendant une minute, cette haute fréquence pouvant être de 27,12 MHz. Le démoulage se fait comme précédemment, après un refroidissement de deux minutes environ à l'intérieur du moule en position fermée.

La pièce obtenue est un vitrage galbé comportant à sa périphérie un joint surmoulé en PVC plastifié d'une dureté de 80 Shore A environ. La pièce comporte, sur la face externe du joint, c'est-à-dire sur la face du joint opposée à la face disposée contre la carrosserie, un tube intégré 22' parfaitement solidaire du joint 25' et pouvant occuper tout ou partie de la périphérie du vitrage 5'.

Le tube 22' peut permettre le passage de câbles électriques par exemple utilisés pour le dégivrage de la lunette arrière d'un véhicule automobile. Il peut également servir pour amener du liquide lave-glace jusqu'au niveau d'une busette d'aspersion placée à la base de l'essuie-glace arrière du véhicule. Il est muni d'un jonc décoratif constitué par la partie du joint formée dans la cavité 21'.

Le pion 27 dont la tête élargie constitue un insert noyé dans la matière plastique du joint 25' présente une partie filetée saillante par rapport au joint 25' qui peut servir à fixer la vitre 5' sur la carrosserie du véhicule, en utilisant un écrou.

Il est bien évident que le moule comportant des éléments tels que représentés sur la figure 3 présente les mêmes avantages que le moule décrit plus haut comportant les éléments représentés sur la figure 2, en ce qui concerne la facilité de pose des inserts, la précision de positionnement de ces inserts et la qualité du joint 25' réalisé, dans la mesure où le poinçon 2' et la matrice 3' sont réalisés en une matière souple telle qu'un élastomère de silicone et où le plastisol est injecté sous faible pression dans la cavité 6'.

Il est bien évident que l'invention ne se limite pas aux modes de réalisation qui ont été décrits.

C'est ainsi qu'on peut utiliser le procédé suivant l'invention pour réaliser des vitrages comportant des inserts décoratifs ou fonctionnels différents de ceux qui ont été décrits. De tels inserts peuvent être constitués par des joncs, des rubans, des barrettes, des plaquettes, des cordons décoratifs, des éléments distinctifs tels que des sigles, dans la mesure où la chaleur engendrée par le rayonnement électromagnétique ne produit pas de détérioration de l'élément décoratif réalisé sous forme d'un insert.

Les inserts peuvent être également constitués par des éléments fonctionnels tels que des câbles électriques, des tubes ou autres corps creux, des pions de centrage permettant un bon positionnement du vitrage sur la carrosserie par vissage d'un écrou ou tout autre élément de fixation permettant le montage du vitrage sur la carrosserie du véhicule.

La force de fermeture de l'outillage et le temps d'injection du liquide réactif constitué par exemple par un plastisol peuvent varier selon la taille du joint et du vitrage sur lequel est réalisé le joint.

De manière préférentielle, pour une glace fixe de véhicule automobile, cette force pourra varier entre 1 et 3 tonnes et pour une lunette arrière de véhicule automobile entre 3 et 5 tonnes.

Dans le mode de réalisation de la figure 3, on pourrait envisager de placer le tube 22' côté carrosserie, en plaçant celui-ci du même côté que le pion 27. On pourrait éventuellement supprimer ce pion 27 et coller le vitrage sur la carrosserie. Ainsi, le tube 22' ne serait pas visible.

Le temps d'injection de la matière plastique réactive telle que le plastisol peut varier entre 20 et 90 secondes. L'opération d'injection peut être accélérée et facilitée par mise sous vide de l'empreinte du moule dont on réalise le remplissage.

La durée d'application des ondes électromagnétiques à haute fréquence ou des micro-ondes dépend de l'épaisseur du joint à réaliser et du coefficient de perte diélectrique du matériau liquide dont on réalise la solidification par gélification, vulcanisation ou polymérisation.

Dans le cas d'un plastisol PVC, la durée d'exposition à un rayonnement à une fréquence de 27,12 MHz est de 20 à 90 secondes.

De manière générale, en ce qui concerne le type de rayonnement électromagnétique, la nature des outillages et les matériaux utilisés pour constituer le joint, on pourra se reporter à la demande de brevet français 88-02492.

De préférence, on utilisera un rayonnement à haute fréquence dont la fréquence peut être de 13,56 MHz, 27,12 MHz ou 40,68 MHz ou encore un rayonnement de type micro-ondes dont la fréquence peut être de 433 MHz, 850 MHz, 915 MHz ou 2450 MHz.

Les parties du moule délimitant l'empreinte de moulage pourront être réalisées de manière préférentielle en élastomère de silicone vulcanisable à température ambiante ou à chaud ou en tout autre matériau souple ou semi-rigide transparent au rayonnement à haute fréquence tel que le polytétrafluoréthylène, le polypropylène et les bétons de résine époxyde de formulation spécialement adaptée.

Pour constituer le joint, on pourra utiliser des matériaux plastiques liquides en l'absence de chauffage par perte diélectrique et gélifiables, polymérisables ou réticulables sous les effets des ondes à haute fréquence ou des micro-ondes. On utilisera de préférence des plastisols à base de PVC et les systèmes polyuréthanne bloqués ou très ralentis liquides à température ambiante.

On peut également envisager l'utilisation de caoutchouc à condition d'utiliser comme liquide réactif des latex présentant une formule convenable.

De manière générale, l'invention peut trouver des applications nombreuses dans le domaine de la construction automobile, dans tous les cas où un insert à but décoratif ou fonctionnel doit être associé au joint d'un vitrage.

## Revendications

1. Procédé de réalisation d'un joint (25, 25') en une matière plastique durcissable solidaire d'une partie au moins de la périphérie d'un vitrage (5, 5') minéral ou organique par injection de la matière plastique à l'état fluide dans l'empreinte d'un moule (2, 3, 2', 3') fermé en matière souple, dans lequel est placé le bord du vitrage (5, 5'), la matière plastique étant injectée dans le moule à l'état inerte puis activée par un rayonnement électromagnétique à haute, à très haute ou à ultra haute fréquence, caractérisé par le fait que le joint comporte en outre un insert (22, 22', 27) mis en place dans l'empreinte (6, 6') du moule avant l'injection de la matière plastique, cette injection et le durcissement ultérieur de la matière plastique étant effectués à l'intérieur de l'empreinte (6, 6') du moule dans laquelle sont disposés, pendant ces opérations, le bord (5a, 5'a) du vitrage et l'insert (22, 22', 27) dans leur position relative définitive sur le vitrage à l'état élaboré.

2. Procédé suivant la revendication 1, caractérisé par le fait que l'insert (22, 22') comporte une partie en saillie qui est engagée lors de la mise en place de l'insert dans l'empreinte (6, 6') du moule, dans une ouverture (21, 21') d'une paroi de l'empreinte (6, 6').

3. Procédé suivant l'une quelconque des revendications 1 et 2, caractérisé par le fait que l'insert (22) comporte au moins un dispositif d'ancrage (23) placé en saillie à l'intérieur de l'empreinte (6) du moule, lors de la mise en place de l'insert avant l'injection de la matière plastique.

4. Procédé suivant l'une quelconque des revendications 1 à 3, caractérisé par le fait que l'empreinte (6, 6') du moule est délimitée par des parois (2, 3, 2', 3') en une matière souple et élastique telle qu'un élastomère de silicone.

5. Procédé suivant l'une quelconque des revendications 1 à 4, caractérisé par le fait que le vitrage (5) est un vitrage galbé dont la hauteur de flèche est supérieure à 3 mm.

6. Procédé suivant l'une quelconque des revendications 1 à 5, caractérisé par le fait que l'insert (22) est constitué par un jonc décoratif.

7. Procédé suivant l'une quelconque des revendications 1 à 5, caractérisé par le fait que l'insert (22) est en un matériau à structure cellulaire.

8. Procédé suivant l'une quelconque des revendications 1 à 5, caractérisé par le fait que l'insert est constitué par un tube ou élément creux (22') permettant le passage de câbles électriques dans le joint (25') du vitrage (5') ou le passage d'un liquide dans le joint (25') jusqu'en un point défini du vitrage (5').

9. Procédé suivant l'une quelconque des revendications 1 à 8, caractérisé par le fait que la matière plastique injectée pour constituer le joint (25, 25') est un plastisol PVC.

10. Procédé suivant l'une quelconque des revendications 1 à 9, dans lequel la cavité du moule (6, 6') est délimitée par deux éléments de moule (2, 2', 3, 3') caractérisé par le fait qu'on exerce une force de fermeture comprise entre 1 et 3 tonnes entre les éléments de moule (2, 2', 3, 3') délimitant l'empreinte (6, 6') du moule, pendant l'injection et le durcissement de la matière plastique.

11. Procédé suivant l'une quelconque des revendications 1 à 10, caractérisé par le fait que le temps d'injection de la matière plastique dans l'empreinte (6, 6') du moule est compris entre 20 et 90 secondes.

12. Procédé suivant l'une quelconque des revendications 1 à 11, caractérisé par le fait que la matière plastique du joint (25, 25') est activée par un rayonnement à haute fréquence.

13. Procédé suivant la revendication 12, caractérisé par le fait que le rayonnement électromagnétique a une fréquence de 27,12 MHz.

14. Procédé suivant l'une quelconque des revendications 1 à 11, caractérisé par le fait que la matière plastique constituant le joint (25, 25') est activée par un rayonnement de type micro-ondes.

15. Procédé suivant la revendication 14, caractérisé par le fait que le rayonnement micro-ondes a une fréquence voisine de 2450 MHz.

16. Dispositif pour la réalisation d'un joint en matière plastique durcissable solidaire d'une partie au moins de la périphérie d'un vitrage (5), par moulage de la matière plastique à l'état fluide autour du vitrage pour constituer le joint et durcissement du joint moulé sur le vitrage, la matière plastique étant injectée dans le moule à l'état inerte puis activée par un rayonnement électromagnétique à haute, à très haute ou à ultra-haute fréquence, comportant un moule (1) en deux parties (2, 3, 2', 3') ménageant entre elles dans leur position de fermeture un espace libre comportant une partie centrale (4) pour recevoir le vitrage (5, 5') et une partie périphérique (6, 6') constituant l'empreinte de moulage du joint (25, 25'), caractérisé par le fait qu'un insert (22, 22', 27) est fixé sur l'une au moins des parois (6a, 6'a, 6b; 6'b) des parties (2, 3, 2', 3') du moule (1) délimitant l'empreinte de moulage (6, 6'), de manière à présenter une partie en saillie vers l'intérieur de l'empreinte (6, 6') du moule.

17. Dispositif suivant la revendication 16, caractérisé par le fait que l'une au moins des parois (6a, 6'a, 6b, 6'b) de l'une des deux parties (2, 3, 2', 3') du moule (1) comporte une cavité (21, 21') pour l'engagement d'une partie en saillie d'un insert (22, 22') et la fixation de cet insert sur la paroi (6a, 6'a, 6b, 6'b) correspondante.

18. Dispositif suivant l'une quelconque des revendications 16 et 17, caractérisé par le fait que les deux parties (2, 3, 2', 3') du moule (1) délimitant entre elles un espace libre comportant à sa périphérie l'empreinte de moulage (6, 6') sont réalisées en un élastomère de silicone vulcanisé.

19. Vitrage en particulier pour véhicule automobile, comportant une vitre en verre transparent minéral ou organique (5, 5') et un joint en matière plastique (25, 25') solidaire d'une partie au moins de la périphérie de la vitre (5, 5') réalisé par moulage à l'état fluide en contact avec le bord de la vitre (5, 5') et durcissement par un rayonnement électromagnétique, caractérisé par le fait que la vitre (5, 5') est galbée et présente une flèche au moins égale à 3 mm et que le joint en matière plastique (25, 25') solidaire de la périphérie de la vitre (5, 5') renferme au moins un insert (22, 22', 27).

20. Vitrage suivant la revendication 19, caractérisé par le fait que l'insert est constitué par un jonc décoratif (22) présentant une surface apparente visible sur une des faces du joint (25).

21. Vitrage suivant la revendication 18, caractérisé par le fait que l'insert (22) est en un matériau à structure cellulaire.

22. Vitrage suivant la revendication 19, caractérisé par le fait que l'insert (22') est constitué par un conduit ou corps creux (22').

23. Vitrage suivant la revendication 22, caractérisé par le fait que le conduit ou corps creux (22') est utilisé pour le passage de câbles d'alimentation électrique.

24. Vitrage suivant la revendication 22, caractérisé par le fait que le conduit ou corps creux (22') constitue un tube d'alimentation en liquide de lavage du vitrage.

25. Vitrage suivant la revendication 19, caractérisé par le fait que l'insert (27) est constitué par une vis dont une partie filetée est en saillie vers l'extérieur par rapport au joint (25') du vitrage.

**Patentansprüche**

1. Verfahren zur Herstellung einer Dichtung (25, 25') aus einem härtbaren Kunststoffmaterial, die mit wenigstens einem Teil des Umfangsrandes einer mineralischen oder organischen Verglasung (5, 5') einstückig ist, durch Spritzen des Kunststoffs im flüssigen Zustand in die Vertiefung einer geschlossenen Form (2, 3, 2', 3') aus weichem Material, in der der Rand der Verglasung (5, 5') angeordnet wird, wobei der Kunststoff im inerten Zustand in die Form gespritzt wird und anschließend durch eine elektromagnetische Strahlung mit hoher, sehr hoher oder ultra-hoher Frequenz aktiviert wird, dadurch gekennzeichnet, daß die Dichtung ferner einen Einsatz (22, 22', 27) aufweist, der vor dem Einspritzen des Kunststoffs in der Vertiefung (6, 6') der Form angeordnet wird, wobei das Einspritzen und das Aushärten des Kunststoffs im Inneren der Vertiefung (6, 6') der Form erfolgen, in der während dieser Vorgänge der Rand (5a, 5'a) der Verglasung und der Einsatz (22, 22', 27) in ihren definitiven relativen Positionen angeordnet sind, die sie auf der fertiggestellten Verglasung einnehmen.

2. Verfahren nach Anspruch 1, dadurch gekennzeichnet, daß der Einsatz (22, 22') einen vorspringenden Teil aufweist, der beim Anordnen des Einsatzes in der Vertiefung (6, 6') der Form in Eingriff in eine Öffnung 21, 21') einer Wand der Vertiefung (6, 6') gebracht wird.

3. Verfahren nach einem der Ansprüche 1 und 2, dadurch gekennzeichnet, daß der Einsatz (22) wenigstens eine Verankerungsvorrichtung (23) aufweist, die beim Anordnen des Einsatzes vor dem Einspritzen des Kunststoffs vorspringend im Inneren der Vertiefung (6) der Form angeordnet ist.

4. Verfahren nach einem der Ansprüche 1 bis 3, dadurch gekennzeichnet, daß die Vertiefung (6, 6') der Form durch Wände (2, 3, 2', 3') aus weichem und elastischem Material, wie einem Silikonelastomer, begrenzt ist.

5. Verfahren nach einem der Ansprüche 1 bis 4, dadurch gekennzeichnet, daß die Verglasung (5) eine gewölbte Verglasung ist, deren Pfeilhöhe mehr als 3mm beträgt.

6. Verfahren nach einem der Ansprüche 1 bis 5, dadurch gekennzeichnet, daß der Einsatz (22) durch eine Zierleiste gebildet ist.

7. Verfahren nach einem der Ansprüche 1 bis 5, dadurch gekennzeichnet, daß der Einsatz (22) aus einem Material mit Zellenstruktur gebildet ist.

8. Verfahren nach einem der Ansprüche 1 bis 5, dadurch gekennzeichnet, daß der Einsatz aus einem Rohr oder einem hohlen Element (22') besteht, das das Hindurchführen von elektrischen Kabeln in der Dichtung (25') der Verglasung (5') oder das Hindurchleiten einer Flüssigkeit in der Dichtung (25') bis zu einem bestimmten Punkt der Verglasung (5') ermöglicht.

9. Verfahren nach einem der Ansprüche 1 bis 8, dadurch gekennzeichnet, daß der zu Bildung der Dichtung eingespritzte Kunststoff (25, 25') ein Plastisol-PVC ist.

10. Verfahren nach einem der Ansprüche 1 bis 9, bei dem der Formhohlraum (6, 6') durch zwei Formelemente (2, 3, 2', 3') begrenzt ist, dadurch gekennzeichnet, daß während des Einspritzens und des Härtens des Kunststoffs eine Schließkraft zwischen 1 und 3 Tonnen auf die die Vertiefung (6, 6') der Form begrenzenden Formelemente (2, 3, 2', 3') aufgebracht wird.

11. Verfahren nach einem der Ansprüche 1 bis 10, dadurch gekennzeichnet, daß die Dauer des Einspritzens des Kunststoffs in die Vertiefung (6, 6') der Form zwischen 20 und 90 Sekunden liegt.

12. Verfahren nach einem der Ansprüche 1 bis 11, dadurch gekennzeichnet, daß das Kunststoffmaterial der Dichtung (25, 25') durch Hochfrequenzstrahlung aktiviert wird.

**13.** Verfahren nach Anspruch 12, dadurch gekennzeichnet, daß die elektromagnetische Strahlung eine Frequenz von 27, 12 MHz aufweist.

**14.** Verfahren nach einem der Ansprüche 1 bis 11, dadurch gekennzeichnet, daß das die Dichtung (25, 25') bildende Kunststoffmaterial durch Mikrowellenstrahlung aktiviert wird.

**15.** Verfahren nach Anspruch 14, dadurch gekennzeichnet, daß die Mikrowellenstrahlung eine Frequenz nahe 2450 MHz aufweist.

**16.** Vorrichtung zur Herstellung einer Dichtung aus einem härtbaren Kunststoffmaterial, die mit wenigstens einem Teil des Umfangsrandes einer mineralischen oder organischen Verglasung (5) einstückig ist, durch Gießen des Kunststoffs im flüssigen Zustand um die Verglasung und durch Härten der auf die Verglasung gegossenen Dichtung, wobei der Kunststoff im inerten Zustand in die Form gespritzt wird und anschließend durch eine elektromagnetische Strahlung mit hoher, sehr hoher oder ultra-hoher Frequenz aktiviert wird, mit einer Form (1), die aus zwei Teilen (2, 3, 2', 3'), welche in ihrer Schließposition zwischen sich einen freien Raum bilden, der einen zentralen Bereich (4) zur Aufnahme der Verglasung (5, 5') und einen Randbereich (6, 6') aufweist, der die Vertiefung zum Formen der Dichtung (25, 25') bildet, dadurch gekennzeichnet, daß ein Einsatz (22, 22', 27) auf wenigstens einer der Wände (6a, 6'a, 6b; 6'b) der Teile (2, 3, 2', 3') der Form (1), welche die Formevertiefung (6, 6') begrenzen, derart angebracht ist, daß er einen in das Innere der Vertiefung (6, 6') vorspringenden Teil aufweist.

**17.** Vorrichtung nach Anspruch 16, dadurch gekennzeichnet, daß wenigstens eine der Wände (6a, 6'a, 6b; 6'b) wenigstens eines der Teile (2, 3, 2', 3') der Form (1) einen Hohlraum (21, 21') zum Eingreifen eines vorspringenden Teils eines Einsatzes (22, 22') und zur Befestigung dieses Einsatzes an der entsprechenden Wand (6a, 6'a, 6b; 6'b) aufweist.

**18.** Vorrichtung nach einem der Ansprüche 16 und 17, dadurch gekennzeichnet, daß die beiden Teile (2, 3, 2', 3') der Form (1), die zwischen sich einen freien Raum begrenzen, der an seinem Umfangsrand die Formvertiefung 6, 6') aufweist, aus vulkanisiertem Silikonelastomer bestehen.

**19.** Verglasung, insbesondere für Automobile, mit einer Scheibe (5, 5') aus transparentem mineralischem oder organischem Glas und eine mit wenigstens einem Teil des Umfangsrandes der Scheibe (5, 5') einstückige Dichtung (25, 25') aus Kunststoffmaterial, die durch Gießen im flüssigen Zustand in Kontakt mit dem Rand der Scheibe (5, 5') und durch Härten mittels elektromagnetischer Strahlung gebildet ist, dadurch gekennzeichnet, daß die Scheibe (5, 5') gewölbt ist und Wölbungshöhe aufweist, die wenigstens gleich 3mm ist, und daß die mit dem Rand der Scheibe (5, 5') einstückige Dichtung (25, 25') aus Kunststoffmaterial wenigstens einen Einsatz (22, 22', 27) einschließt.

**20.** Verglasung nach Anspruch 19, dadurch gekennzeichnet, daß der Einsatz durch eine Zierleiste (22) gebildet ist, die eine auf einer der Flächen der Dichtung (25) sicht bare Zierfläche aufweist.

**21.** Verglasung nach Anspruch 19, dadurch gekennzeichnet, daß der Einsatz (22) aus einem Material mit Zellenstruktur besteht.

**22.** Verglasung nach Anspruch 19, dadurch gekennzeichnet, daß der Einsatz (22') aus einer Leitung oder einem Hohlkörper (22') besteht.

**23.** Verglasung nach Anspruch 22, dadurch gekennzeichnet, daß die Leitung oder der Hohlkörper (22') zum Hindurchführen von elektrischen Versorgungskabeln verwendet wird.

**24.** Verglasung nach Anspruch 22, dadurch gekennzeichnet, daß die Leitung oder der Hohlkörper (22') ein Rohr zur Zufuhr einer Scheibenreinigungsflüssigkeit bildet.

**25.** Verglasung nach Anspruch 19, dadurch gekennzeichnet, daß der Einsatz (27) durch eine Schraube gebildet ist, von der ein Gewindeteil in bezug auf die Dichtung (25') der Verglasung nach außen vorsteht.

## Claims

**1.** Method for the manufacture of a seal (25, 25') from a hardenable plastics material integral with at least one part of the periphery of a mineral or organic glazing panel (5, 5') by injecting plastics material in the fluid state into the impression of a closed mould (2, 3, 2', 3') of flexible material, in which the edge of the glazing panel (5, 5') is placed, the plastics material being injected into the mould in the inert state, then activated by high frequency, very high frequency or ultra high frequency electromagnetic radiation, characterised by the fact that the seal also comprises an insert (22, 22', 27) placed in the impression (6, 6') of the mould before the injection of the plastics material, this injection and the subsequent hardening of the plastics material being carried out inside the impression (6, 6') of the mould in which there are disposed, during these operations, the edge (5a, 5'a) of the glazing panel and the insert (22, 22', 27) in their definitive relative position on the glazing panel in the processed state.

2. Method according to Claim 1, characterised by the fact that the insert (22, 22') comprises a projecting part which is engaged at the time of positioning of the insert in the impression (6, 6') of the mould, in an opening (21, 21') in a wall of the impression (6, 6').

3. Method according to one of Claims 1 and 2, characterised by the fact that the insert (22) comprises at least one anchoring device (23) projecting inside the impression (63) of the mould, at the time of positioning of the insert before the injection of the plastics material.

4. Method according to one of Claims 1 to 3, characterised by the fact that the impression (6, 6') of the mould is defined by walls (2, 3, 2', 3') of a flexible and elastic material such as a silicone elastomer.

5. Method according to one of Claims 1 to 4, characterised by the fact that the glazing panel (5) is a curved glazing panel whereof the height of the curve is greater than 3 mm.

6. Method according to one of Claims 1 to 5, characterised by the fact that the insert (22) is constituted by a decorative bead.

7. Method according to one of Claims 1 to 5, characterised by the fact that the insert (22) is made from a material having a cellular structure.

8. Method according to one of Claims 1 to 5, characterised by the fact that the insert is constituted by a tube or hollow member (22') allowing the passage of electrical cables in the seal (25') of the glazing panel (5') or the passage of a liquid in the seal (25') as far as a defined point of the glazing panel (5').

9. Method according to one of Claims 1 to 8, characterised by the fact that the plastics material injected in order to constitute the seal (25, 25') is a PVC plastisol.

10. Method according to one of Claims 1 to 9, in which the cavity of the mould (6, 6') is defined by two mould members (2, 2', 3, 3') characterised by the fact that a closing force comprised between 1 and 3 tonnes is exerted between the mould members (2, 2', 3, 3') defining the impression (6, 6') of the mould, during the injection and hardening of the plastics material.

11. Method according to one of Claims 1 to 10, characterised by the fact that the time for the injection of the plastics material into the impression (6, 6') of the mould is comprised between 20 and 90 seconds.

12. Method according to one of Claims 1 to 11, characterised by the fact that the plastics material of the seal (25, 25') is activated by high frequency radiation.

13. Method according to Claim 12, characterised by the fact that the electromagnetic radiation has a frequency of 27.12 MHz.

14. Method according to one of Claims 1 to 11, characterised by the fact that the plastics material constituting the seal (25, 25') is activated by radiation of the micro-wave type.

15. Method according to Claim 14, characterised by the fact that the micro-wave radiation has a frequency close to 2450 MHz.

16. Apparatus for the manufacture of a seal of hardenable plastics material integral with at least one part of the periphery of a glazing panel (5), by moulding plastics material in the fluid state around the glazing panel in order to constitute the seal and hardening of the seal moulded on the glazing panel, the plastics material being injected into the mould in the inert state, then activated by high frequency, very high frequency or ultra-high frequency electromagnetic radiation, comprising a mould (1) in two parts (2, 3, 2', 3') providing therebetween, in their closed position, a free space comprising a central part (4) for receiving the glazing panel (5, 5') and a peripheral part (6, 6') constituting the moulding impression for the seal (25, 25'), characterised by the fact that an insert (22, 22', 27) is fixed on at least one of the walls (6a, 6'a, 6b; 6'b) of the parts (2, 3, 2', 3') of the mould (1) defining the moulding impression (6, 6'), in order to produce a part projecting towards the inside of the impression (6, 6') of the mould.

17. Apparatus according to Claim 16, characterised by the fact that at least one of the walls (6a, 6'a, 6b, 6'b) of one of the two parts (2, 3, 2', 3') of the mould (1) comprises a cavity (21, 21') for the engagement of a projecting part of an insert (22, 22') and the fixing of this insert to the corresponding wall (6a, 6'a, 6b, 6'b).

18. Apparatus according to one of Claims 16 and 17, characterised by the fact that the two parts (2, 3, 2', 3') of the mould (1) defining therebetween a free space comprising on its periphery the moulding impression (6, 6') are made from a vulcanized silicone elastomer.

19. Glazing panel in particular for a motor vehicle, comprising a pane of transparent mineral or organic glass (5, 5') and a seal of plastics material (25, 25') integral with at least one part of the periphery of the glazing panel (5, 5') produced by moulding, in the fluid state, in contact with the edge of the glazing panel (5, 5') and hardening by electromagnetic radiation, characterised by the fact that the glazing panel (5, 5') is curved and has a curve at least equal to 3 mm and that the seal of plastics material (25, 25') integral with the periphery of the glazing panel (5, 5') encloses at least one insert (22, 22', 27).

20. Glazing panel according to Claim 19, characterised by the fact that the insert is constituted by a decorative bead (22) having an apparent surface visible on one of the sides of the seal (25).

21. Glazing panel according to Claim 18, characterised by the fact that the insert (22) is made from a material having a cellular structure.

22. Glazing panel according to Claim 19, characterised by the fact that the insert (22') is constituted by a tube or hollow body (22').

23. Glazing panel according to Claim 22, characterised by the fact that the tube or hollow body (22') is used for the passage of electrical supply cables.

24. Glazing panel according to Claim 22, characterised by the fact that the tube or hollow body (22') constitutes a tube for the supply of liquid for washing the glazing panel.

25. Glazing panel according to Claim 19, characterised by the fact that the insert (27) is constituted by a screw whereof a threaded part projects towards the outside with respect to the seal (25') of the glazing panel.

FIG.1

FIG.3

FIG.2